# EUROPÄISCHE PATENTSCHRIFT

(11) **EP 4 248 110 B1**
(45) Veröffentlichungstag und Bekanntmachung des Hinweises auf die Patenterteilung: **22.04.2026**
(21) Anmeldenummer: 21810933.8
(22) Anmeldetag: 08.11.2021
(51) Int. Cl.: F16H 63/30, F16H 63/32

(54) **GETRIEBE MIT EINER KOPPELVORRICHTUNG ZUR AN- UND/ODER ABKOPPLUNG EINES ZAHNRADES AN EINE BZW. VON EINER WELLE**
TRANSMISSION WITH A COUPLING DEVICE FOR COUPLING AND/OR UNCOUPLING A GEARWHEEL TO OR FROM A SHAFT
BOÎTE DE VITESSES COMPRENANT UN DISPOSITIF DE COUPLAGE PERMETTANT LE COUPLAGE D'UNE ROUE DENTÉE SUR UN ARBRE ET/OU SON DÉCOUPLAGE DUDIT ARBRE

(30) Priorität: 18.11.2020 DE 102020214490
(43) Veröffentlichungstag der Anmeldung: 27.09.2023
(73) Patentinhaber: Robert Bosch GmbH, 70442 Stuttgart (DE)
(72) Erfinder: WEISSINGER, Daniel, 70825 Korntal-Muenchingen (DE); WALTER, Patrick, 70193 Stuttgart (DE); DREWE, Ingo, 23769 Fehmarn (DE); KIEKBUSCH, Timo, 71638 Ludwigsburg (DE)
(86) Internationale Anmeldenummer: PCT/EP2021/080927
(87) Internationale Veröffentlichungsnummer: WO 2022/106242

(56) Entgegenhaltungen:
- EP-A1- 2 143 979
- CN-A- 106 838 300
- CN-A- 110 985 665
- CN-A- 111 043 305
- CN-U- 204 312 693
- DE-A1- 102010 036 149
- DE-A1- 102012 209 533
- JP-U- S57 166 223
- US-A- 4 449 416

## Beschreibung

### Stand der Technik

Die Erfindung betrifft ein Getriebe für eine elektrische Antriebsordnung mit einer Koppelvorrichtung zur An- und Abkopplung eines Zahnrades an bzw. von einer Welle.

Schaltgabeln mit zugehöriger Mechanik finden Anwendung in Handschaltgetrieben und Doppelkupplungsgetrieben.

So offenbart beispielsweise DE 10 2012 209 533 A1 einen Schaltaktor in einem Getriebe, mit einem Elektromotor, einer davon angetriebenen Spindel, auf der ein Gewindetrieb läuft, und einer Schaltgabel, die an einem entlang einer Traverse verfahrbaren Schlitten gelagert ist. Gewindetrieb und ein Anbindungspunkt der Schaltgabel sind über eine Druckfeder und eine Dämpfung miteinander gekoppelt.

Aus der CN 111 043 305 A ist eine Koppelvorrichtung für den Gangwechsel in einem Getriebe bekannt, wobei die Koppelvorrichtung eine axial verschiebbare Schaltgabel aufweist, welche für den Eingriff in eine Schaltmuffe geeignet ausgebildet ist, wobei durch ein Verschieben der Schaltgabel ein Gangwechsel erfolgt, wobei die Schaltgabel mit einer Schaltmuffe derart koppelbar ist, dass durch einen Antrieb der Schaltgabel eine damit gekoppelte Schaltmuffe entlang einer axialen Richtung verschoben werden kann, wobei ein elektromechanischer Aktuator mit einer Spindel vorgesehen ist, wobei die Spindel mittels des elektromechanischen Aktuators um ihre Längsachse rotierbar ist, wobei die Schaltgabel mit der Spindel gekoppelt ist, so dass die Schaltgabel durch eine Rotationsbewegung der Spindel verschoben werden kann, wobei die Schaltgabel mittels einer Führungsstange geführt ist, wobei die Führungsstange zwei Gleitbuchsen aufweist, wobei die Gleitbuchsen in einem Getriebe festlegbar sind und wobei in jeder Gleitbuchse jeweils ein Ende der Führungsstange geführt ist, wobei die Führungsstange durch die Gleitbuchsen so geführt wird, dass sich die Bewegung der Führungstange auf eine Bewegung in der axialen Richtung beschränkt, wobei die Schaltgabel fest mit der Führungsstange verbunden ist, so dass die Schaltgabel bewegt wird, wenn sich die Führungsstange relativ zu den Gleitbuchsen bewegt. Die axial bewegliche Führungstange kann mittels einer Rastvorrichtung arretiert werden.

Aus der CN 110 985 665 A ist eine Koppelvorrichtung bekannt, welche eine mit einer Schaltmuffe koppelbare Schaltgabel und einen elektromechanischen Aktuator mit einer Spindel umfasst, wobei die Spindel mittels des elektromechanischen Aktuators um ihre Längsachse rotierbar ist, wobei die Schaltgabel mit der Spindel gekoppelt ist, so dass die Schaltgabel durch eine Rotationsbewegung der Spindel entlang einer axialen Richtung verschoben werden kann, und wobei die Schaltgabel mittels einer Führungsstange geführt ist. Die Schaltgabel ist mit Führungsstange gekoppelt, wobei die Führungsstange an ihren Enden in zwei Gleitlagern axial verschiebbar aufgenommen ist. Weiterhin ist eine Rastvorrichtung vorgesehen, welche dazu ausgebildet ist, bei einer axialen Verschiebung der Führungsstange in Kerben der Führungstange einzurasten.

Aus der US 4 419 416 A ist ein Getriebe mit einer Koppelvorrichtung zur An- und/oder Abkopplung eines Zahnrades an eine bzw. von einer Welle bekann, wobei die Koppelvorrichtung eine axial entlang der Welle verschiebbare Schaltmuffe und eine Schaltgabel aufweist, wobei durch ein Verschieben der Schaltmuffe das Zahnrad an die Welle angekoppelt und/oder von der Welle abgekoppelt werden kann, wobei die Schaltgabel mit der Schaltmuffe gekoppelt ist, so dass durch einen Antrieb der Schaltgabel die Schaltmuffe entlang der Welle verschoben werden kann, wobei ein elektromechanischer Aktuator mit einer Spindel vorgesehen ist, wobei die Spindel mittels des elektromechanischen Aktuators um ihre Längsachse rotierbar ist, wobei die Schaltgabel mit der Spindel gekoppelt ist, so dass die Schaltgabel durch eine Rotationsbewegung der Spindel entlang der Welle verschoben werden kann, und wobei die Schaltgabel mittels einer ortsfest im Getriebe eingepannten Führungsstange geführt ist. Die Schaltgabel gleitet auf der Führungsstange, wobei ein in eine Nut eines Gleitschuhs der Schaltgabel eingreifender Stift als Anschlag dient.

### Offenbarung der Erfindung

Das der Erfindung zugrunde liegende Problem wird durch ein Getriebe für eine elektrische Antriebsanordnung mit einer Koppelvorrichtung zur An- und/oder Abkopplung eines Zahnrades an eine bzw. von einer Welle mit den Merkmalen des Anspruchs 1 gelöst. Vorteilhafte Weiterbildungen der Erfindung sind in den Unteransprüchen genannt.

Es wird ein Getrieb für eine elektrische Antriebsanordnung mit einer Koppelvorrichtung zur An- und Abkopplung eines Zahnrades an eine bzw. von einer Welle vorgeschlagen, wobei die Koppelvorrichtung eine axial entlang der Welle verschiebbare Schaltmuffe und eine Schaltgabel aufweist. Durch Verschieben der Schaltmuffe kann das Zahnrad an die Welle angekoppelt und von der Welle abgekoppelt werden. Die Schaltgabel ist mit der Schaltmuffe gekoppelt, so dass durch einen Antrieb der Schaltgabel die Schaltmuffe entlang der Welle verschoben werden kann. Es ist ein elektromechanischer Aktuator mit einer Spindel vorgesehen, wobei die Spindel mittels des elektromechanischen Aktuators (z. B. Elektromotor) um ihre Längsachse rotierbar ist. Die Schaltgabel ist mit der Spindel gekoppelt, so dass die Schaltgabel durch eine Rotationsbewegung der Spindel entlang der Welle verschoben werden kann. Dabei ist die Schaltgabel mittels einer Führungsstange geführt, wobei die Führungsstange zwei Gleitbuchsen aufweist, wobei die Gleitbuchsen in einem Getriebegehäuse des Getriebes angeordnet sind und in jeder Gleitbuchse jeweils ein Ende der Führungsstange geführt ist, wobei die Führungsstange durch die Gleitbuchsen so geführt wird, dass sich die Bewegung der Führungstange auf eine Bewegung parallel zur Welle beschränkt, wobei die Schaltgabel fest mit der Führungsstange verbunden ist, so dass durch das Verschieben der Schaltgabel sich auch die Führungsstange relativ zu den Gleitbuchsen bewegt. Im Unterschied zu den oben zitierten Koppelvorrichtungen, weist die Führungsstange zwei koaxial an der Führungsstange angeordnete Anschlaghülsen auf, die jeweils zwischen der Schaltgabel und einer der beiden Gleitbuchsen angeordnet sind und die eine Bewegung der Führungsstange in Ankoppelrichtung und Abkoppelrichtung begrenzen.

Die Schaltgabel kann durch den elektromechanischen Aktuator mit Spindel axial angetrieben werden, wobei die Führungsstange die Schaltgabel führt (Drehen der Schaltgabel um die Spindel wird verhindert). Das durch den Spindelantrieb erzeugte und nicht erwünschte Rest-Drehmoment wird von der Führungsstange aufgenommen. Somit versursacht die Schaltgabel keine oder allenfalls vernachlässigbar geringe Reibungskräfte an der Schaltmuffe.

Die Schaltgabel ist gemäß der vorliegenden Erfindung mit der Führungsstange derart gekoppelt, dass die Schaltgabel relativ zur Führungsstange unbeweglich ist. Mit anderen Worten, die Schaltgabel ist mit der Führungsstange derart gekoppelt, dass die Schaltgabel und die Führungsstange nur gemeinsam (translatorisch) bewegt werden können.

Dadurch, dass die Führungsstange zwei Gleitbuchsen aufweist, wobei in jeder Gleitbuchse jeweils ein Ende der Führungsstange geführt ist, kann eine präzise und reibungsarme Führung der Führungsstange realisiert werden. Die Schaltgabel ist an der Führungsstange befestigt (wenn sich die Führungsstange relativ zu der oder den Gleitbuchsen bewegt, wird die Schaltgabel mitbewegt). Erfindungsgemäß weist die Führungsstange zwei Anschlaghülsen auf, die eine Bewegung der Führungsstange in Ankoppelrichtung und Abkoppelrichtung begrenzen. Die Anschlaghülsen sind jeweils axial zwischen einer Gleitbuchse und der Schaltgabel auf der Führungsstange angeordnet. Somit können konstruktiv einfach mehrere definierte Anschläge realisiert werden.

Vorliegend ist mit Ankoppeln des Zahnrads an die Welle gemeint, dass das Zahnrad und die Welle nach der Ankopplung drehfest miteinander verbunden werden. Entsprechend ist mit Abkoppeln des Zahnrads von der Welle gemeint, dass das Zahnrad und die Welle nach der Abkopplung relativ zueinander drehbar sind.

Bei dem Zahnrad kann es sich um ein Ritzel handeln, insbesondere dann, wenn dieses (im mit der Welle drehfest gekoppelten Zustand) ein weiteres Element antreibt bzw. als Abtriebselement dient.

Eine Verschiebung/Bewegung/Anordnung axial entlang der Welle bzw. axial zur Welle ist vorliegend in Bezug auf die Längsrichtung der Welle gemeint. So ist beispielsweise mit einer Verschiebung axial entlang der Welle, eine Verschiebung entlang der Längsrichtung der Welle gemeint.

Das Zahnrad kann einen Kupplungskörper mit Zähnen aufweisen. Die Schaltmuffe kann eine Innenverzahnung (innenverzahnter Ring) aufweisen oder mit einer Innenverzahnung gekoppelt sein, wobei die Innenverzahnung mit den Zähnen am Kupplungskörper korrespondiert. Die Schaltmuffe und der Kupplungskörper können Bestandteile einer Klauenkupplung sein bzw. eine Klauenkupplung bilden. Die Klauenkupplung kann weitere Elemente aufweisen, beispielsweise einen Synchronring und/oder eine Führungsmuffe.

Gemäß einer Weiterbildung können die Spindel, die Führungsstange und/oder die Welle parallel zueinander angeordnet sein. Dies erlaubt eine besonders genaue Führung und ein präzises An- bzw. Abkoppeln. Zudem trägt dies zu einem konstruktiv einfachen und stabilen Antrieb bei.

Gemäß einer Weiterbildung kann die Koppelvorrichtung derart ausgebildet sein, dass das Ankoppeln des Zahnrads an die Welle durch eine Rotation der Spindel mittels des elektromechanischen Aktuators in eine erste Rotationsrichtung und somit ein Verschieben der Schaltgabel und der Schaltmuffe in die Ankoppelrichtung erreicht wird. Damit lässt sich eine einfache Ankopplung durch drehenden Antrieb der Spindel in die erste Rotationsrichtung realisieren.

Gemäß einer Weiterbildung kann die Koppelvorrichtung derart ausgebildet sein, dass das Abkoppeln des Zahnrads von der Welle durch eine Rotation der Spindel mittels des elektromechanischen Aktuators in eine zweite Rotationsrichtung und somit ein Verschieben der Schaltgabel und der Schaltmuffe in die Abkoppelrichtung erreicht wird. Damit lässt sich eine einfache Abkopplung durch drehenden Antrieb der Spindel in die zweite Rotationsrichtung (Gegenrichtung zur ersten Rotationsrichtung) bzw. eine einfache Aktuation durch Antrieb des Aktuators in die Gegenrichtung realisieren. Die erste und die zweite Rotationsrichtung sind einander entgegengesetzt gerichtet (z. B. im Uhrzeigersinn bzw. gegen den Uhrzeigersinn). Ebenso sind die Ankoppel- und die Abkoppelrichtung einander entgegengesetzt gerichtet.

Gemäß einer Weiterbildung kann die Schaltgabel mit der Spindel über eine Spindelmutter gekoppelt sein. Damit kann eine konstruktiv einfache und stabile Kopplung realisiert werden.

Gemäß einer Weiterbildung kann die Spindel mit einem ihrer Enden in einer Spindelgleitbuchse geführt sein. Dies kann den präzisen Lauf der Spindel begünstigen. Diese Führung kann am freien Ende der Spindel angeordnet sein. Gemäß einer Weiterbildung kann die Spindel mit einem ihrer Enden in einem Spindelwälzlager geführt sein. Dies kann den präzisen Lauf der Spindel begünstigen. Zudem kann beispielsweise so eine Abstützung an dem dem elektromechanischen Aktuator zugewandten Ende der Spindel realisiert werden. Damit werden auf die Spindel wirkenden Kräfte, jedenfalls großenteils, über das Spindelwälzlager abgeleitet.

Bei dem Getriebe kann es sich bspw. um ein Getriebe für eine elektrische Antriebseinheit oder eine elektrische Achse ("e-Achse") eines Fahrzeugs oder Kraftfahrzeugs handeln.

Nachfolgend wird eine mögliche Ausführungsform der Erfindung unter Bezugnahme auf die beiliegenden Zeichnungen erläutert. Es zeigt:
Figur 1 eine perspektivische Ansicht einer Koppelvorrichtung, welche Bestandteil eines erfindungsgemäßen Getriebes ist, und
Figur 2 eine Schnittansicht von oben auf die Koppelvorrichtung gem. Fig. 1.

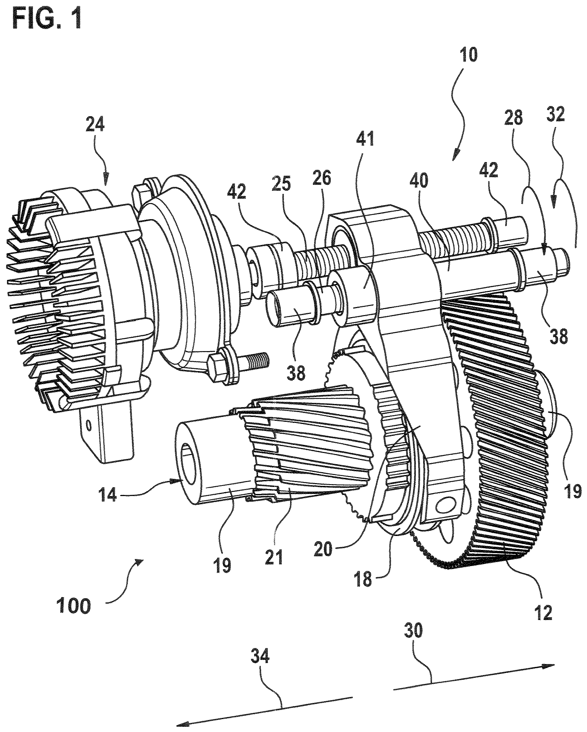

Figur 1 zeigt eine perspektivische Ansicht einer Koppelvorrichtung 10. Die Koppelvorrichtung 10 dient zur An- und/oder Abkopplung eines Zahnrades bzw. Ritzels 21 an eine bzw. von einer Welle 14 (in Fig.1 ist der abgekoppelte Zustand gezeigt). Hierzu weist die Koppelvorrichtung 10 eine axial entlang der Welle 14 verschiebbare Schaltmuffe 18 und eine Schaltgabel 20 auf. Die Schaltmuffe 18 und die Schaltgabel 20 sind miteinander derart gekoppelt, dass durch ein Verschieben der Schaltgabel 20 die Schaltmuffe 18 entlang der Welle 14 verschoben werden kann.

Die Koppelvorrichtung 10, das Zahnrad bzw. Ritzel 21 sowie die Welle 14 sind vorliegend als Teil eines erfindungsgemäßen Getriebes 100 ausgeführt. Die Welle 14 ist vorliegend mittels zweier Wälzlager, von denen jeweils ein Wälzlager in den Abschnitten 19 angeordnet ist, innerhalb eines Getriebegehäuses des Getriebes 100 gelagert (nicht dargestellt). Die Wälzlager in den Abschnitten 19 können dabei in das Getriebegehäuse eingebracht, bspw. in entsprechenden Lageraufnahmen eingepresst sein. Auf der Welle 14 kann ein weiteres Zahnrad 12 angeordnet sein, welches bspw. drehfest mit der Welle 14 gekoppelt sein kann.

Die Schaltgabel 20 ist fest mit einer Führungsstange 26 verbunden. Mit anderen Worten, eine Verschiebung der Führungsstange 26 bewirkt eine entsprechende Verschiebung der Schaltgabel 20 bzw. eine Verschiebung der Schaltgabel 20 bewirkt eine entsprechende Verschiebung der Führungsstange 26.

Die Koppelvorrichtung 10 weist einen elektromechanischen Aktuator 24 mit einer Spindel 25 auf. Der elektromechanische Aktuator 24 kann die Spindel 25 rotatorisch antreiben. Mit anderen Worten, der elektromechanische Aktuator 24 kann eine Rotation der Spindel 25 um ihre Längsachse bewirken.

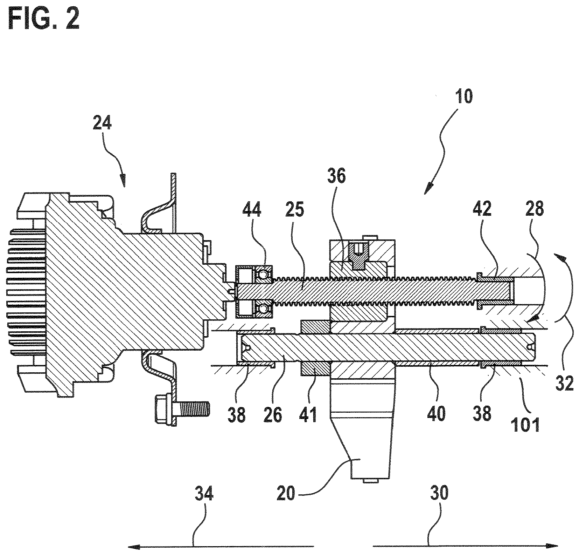

Figur 2 zeigt eine Schnittansicht von oben auf die Koppelvorrichtung 10 gemäß Fig. 1. Vorliegend ist die Schaltgabel 20 über eine Spindelmutter 36 mit der Spindel 25 gekoppelt. Eine Rotation der Spindel 25 um ihre Längsachse bewirkt eine Verschiebung der Spindelmutter 36 und somit der Schaltgabel 20 entlang der Spindel 25 (bzw. entlang der Längsachse der Spindel 25).

Da die Schaltgabel 20 sowohl mit der Spindel 25 als auch der mit der Führungsstange 26 gekoppelt ist, wird das durch die Rotation der Spindel 25 erzeugte und nicht erwünschte Rest-Drehmoment, welches auf die Schaltgabel 20 übertragen wird, von der Führungsstange 26 aufgenommen. Somit wird dieses Drehmoment von der Schaltgabel 20 nicht an die Schaltmuffe 18 übertragen, wo es dadurch zu Reibungsverlusten und Verspannungen kommen kann.

Die Spindel 25, die Führungsstange 26 und die Welle 14 sind vorliegend parallel zueinander angeordnet (vgl. auch Fig.1).

Die Spindel 25 ist vorliegend mit ihrem dem elektromechanischen Aktuator 24 abgewandtem Ende in einer Spindelgleitbuchse 42 rotatorisch geführt aufgenommen. Mit ihrem anderen, dem elektromechanischen Aktuator 24 zugewandten Ende ist die Spindel 25 in einem Spindelwälzlager 44 rotatorisch geführt aufgenommen.

Die Führungsstange 26 ist vorliegend in zwei Gleitbuchsen 38 aufgenommen. Dabei ist in jeder Gleitbuchse 38 jeweils ein Ende der Führungsstange 26 geführt, so dass die Führungsstange 26 axial verschoben werden kann. Durch das Verschieben der Schaltgabel 20 mittels des elektromechanischen Aktuators 24 wird auch die Führungsstange 26 und die Schaltmuffe 18 axial entlang der Welle 14 verschoben.

Zum Ankoppeln des Zahnrads bzw. Ritzels 21 an die Welle 14 versetzt der elektromechanische Aktuator 24 die Spindel 25 in Rotation in eine erste Rotationsrichtung 32. Dies bewirkt ein Verschieben der Spindelmutter 36, der Schaltgabel 20, der Führungsstange 26 und der Schaltmuffe 18 in eine Ankoppelrichtung 34.

Die Führungsstange 26 wird durch die Gleitbuchse 34 geführt, so dass die Bewegung der Führungsstange 26 auf eine Bewegung parallel zur Welle 14 beschränkt wird.

Analog zu den Wälzlagern in den Abschnitten 19 können die Gleitbuchsen 38, die Spindelgleitbuchse 42 und das Spindelwälzlager 44 in dem Getriebegehäuse 101 des Getriebes 100 angeordnet sein. Dies ist in Figur 2 durch schraffierte Flächen für die Gleitbuchsen 38 und die Spindelgleitbuchse 42 angedeutet.

Zum Abkoppeln des Zahnrads bzw. Ritzels 21 von der Welle 14 versetzt der elektromechanische Aktuator 24 die Spindel 25 in Rotation in eine zweite Rotationsrichtung 28. Dies bewirkt ein Verschieben der Spindelmutter 36, der Schaltgabel 20, der Führungsstange 26 und der Schaltmuffe 18 in eine Abkoppelrichtung 30.

Die Führungsstange 26 weist vorliegend zwei Anschlaghülsen 40, 41 auf. Diese sind koaxial an der Führungsstange 26 angeordnet. Die Anschlaghülsen 40, 41 sind dabei jeweils zwischen der Schaltgabel 20 und einer der beiden Gleitbuchsen 38 angeordnet.

Die Anschlaghülse 40 begrenzt eine Bewegung der Führungsstange 26 in die Abkoppelrichtung 30 und die Anschlaghülse 41 begrenzt eine Bewegung der Führungsstange 26 in die Ankoppelrichtung 34.

## Patentansprüche

1. Getriebe (100) für eine elektrische Antriebsanordnung mit einer Koppelvorrichtung (10), wobei das Getriebe (100) ein Zahnrad (21) und eine Welle (14) aufweist, wobei die Koppelvorrichtung (10) zur An- und Abkopplung des Zahnrades (21) an beziehungsweise von der Welle (14) dient, wobei die Koppelvorrichtung (10) eine axial entlang der Welle (14) verschiebbare Schaltmuffe (18) und eine Schaltgabel (20) aufweist, wobei durch ein Verschieben der Schaltmuffe (18) das Zahnrad (21) an die Welle (14) angekoppelt und von der Welle (14) abgekoppelt werden kann, wobei die Schaltgabel (20) mit der Schaltmuffe (18) gekoppelt ist, so dass durch einen Antrieb der Schaltgabel (20) die Schaltmuffe (18) entlang der Welle (14) verschoben werden kann, wobei ein elektromechanischer Aktuator (24) mit einer Spindel (25) vorgesehen ist, wobei die Spindel (25) mittels des elektromechanischen Aktuators (24) um ihre Längsachse rotierbar ist, wobei die Schaltgabel (20) mit der Spindel (25) gekoppelt ist, so dass die Schaltgabel (20) durch eine Rotationsbewegung der Spindel (25) entlang der Welle (14) verschoben werden kann, wobei die Schaltgabel (20) mittels einer Führungsstange (26) geführt ist, wobei die Führungsstange (26) zwei Gleitbuchsen (38) aufweist, wobei die Gleitbuchsen (38) in einem Getriebegehäuse (101) des Getriebes (100) angeordnet sind und in jeder Gleitbuchse (38) jeweils ein Ende der Führungsstange (26) geführt ist, wobei die Führungsstange (26) durch die Gleitbuchsen (38) so geführt wird, dass sich die Bewegung der Führungsstange auf eine Bewegung parallel zur Welle (14) beschränkt, wobei die Schaltgabel (20) fest mit der Führungsstange (26) verbunden ist, so dass durch das Verschieben der Schaltgabel (20) sich auch die Führungsstange (26) relativ zu den Gleitbuchsen mitbewegt, wobei die Führungsstange (26) zwei koaxial an der Führungsstange (26) angeordnete Anschlaghülsen (40, 41) aufweist, die jeweils zwischen der Schaltgabel (20) und einer der beiden Gleitbuchsen (38) angeordnet sind und die eine Bewegung der Führungsstange (26) in Ankoppelrichtung (30) und Abkoppelrichtung (24) begrenzen.

2. Getriebe (100) nach Anspruch 1, **dadurch gekennzeichnet, dass** die Spindel (25), die Führungsstange (26) und/oder die Welle (14) parallel zueinander angeordnet sind.

3. Getriebe (100) nach Anspruch 1 oder 2, **dadurch gekennzeichnet, dass** die Koppelvorrichtung (10) derart ausgebildet ist, dass das Ankoppeln des Zahnrads (21) an die Welle (14) durch eine Rotation der Spindel (25) mittels des elektromechanischen Aktuators (24) in eine erste Rotationsrichtung (28) und somit ein Verschieben der Schaltgabel (20) und der Schaltmuffe (18) in die Ankoppelrichtung (30) erreicht wird.

4. Getriebe (100) nach einem der voranstehenden Ansprüche, **dadurch gekennzeichnet, dass** die Koppelvorrichtung (10) derart ausgebildet ist, dass das Abkoppeln des Zahnrads (21) von der Welle (14) durch eine Rotation der Spindel (25) mittels des elektromechanischen Aktuators (24) in eine zweite Rotationsrichtung (32) und somit ein Verschieben der Schaltgabel (20) und der Schaltmuffe (18) in die Abkoppelrichtung (34) erreicht wird.

5. Getriebe (100) nach einem der voranstehenden Ansprüche, **dadurch gekennzeichnet, dass** die Schaltgabel (20) mit der Spindel (25) über eine Spindelmutter (36) gekoppelt ist.

6. Getriebe nach einem der voranstehenden Ansprüche, **dadurch gekennzeichnet, dass** die Spindel (25) mit einem ihrer Enden in einer Spindelgleitbuchse (42) geführt ist.

7. Getriebe (100) nach einem der voranstehenden Ansprüche, **dadurch gekennzeichnet, dass** die Spindel (25) mit einem ihrer Enden in einem Spindelwälzlager (44) geführt ist.

## Claims

1. Transmission (100) for an electrical drive arrangement with a coupling device (10), wherein the transmission (100) has a gear (21) and a shaft (14), wherein the coupling device (10) serves for coupling and decoupling the gear (21) to and from the shaft (14), wherein the coupling device (10) has a shift sleeve (18) which is displaceable axially along the shaft (14) and a shift fork (20), wherein displacement of the shift sleeve (18) allows the gear (21) to be coupled to the shaft (14) and decoupled from the shaft (14), wherein the shift fork (20) is coupled to the shift sleeve (18), such that driving of the shift fork (20) allows the shift sleeve (18) to be displaced along the shaft (14), wherein an electromechanical actuator (24) with a spindle (25) is provided, wherein the spindle (25) is rotatable about its longitudinal axis by means of the electromechanical actuator (24), wherein the shift fork (20) is coupled to the spindle (25), such that the shift fork (20) can be displaced along the shaft (14) by a rotational movement of the spindle (25), wherein the shift fork (20) is guided by means of a guide rod (26), wherein the guide rod (26) has two sliding bushings (38), wherein the sliding bushings (38) are arranged in a transmission housing (101) of the transmission (100) and an end of the guide rod (26) is guided in each sliding bushing (38), wherein the guide rod (26) is guided through the sliding bushings (38) in such a way that the movement of the guide rod is limited to a movement parallel to the shaft (14), wherein the shift fork (20) is firmly connected to the guide rod (26), such that the displacement of the shift fork (20) also causes the guide rod (26) to move relative to the sliding bushings, wherein the guide rod (26) has two stop sleeves (40, 41) arranged coaxially on the guide rod (26), which are each arranged between the shift fork (20) and one of the two sliding bushings (38) and which limit a movement of the guide rod (26) in the coupling direction (30) and the decoupling direction (24).

2. Transmission (100) according to Claim 1, **characterized in that** the spindle (25), the guide rod (26) and/or the shaft (14) are arranged parallel to one another.

3. Transmission (100) according to Claim 1 or 2, **characterized in that** the coupling device (10) is designed in such a way that the coupling of the gear (21) to the shaft (14) is achieved by a rotation of the spindle (25) by means of the electromechanical actuator (24) in a first direction of rotation (28) and thus a displacement of the shift fork (20) and the shift sleeve (18) in the coupling direction (30).

4. Transmission (100) according to any of the preceding claims, **characterized in that** the coupling device (10) is designed in such a way that the decoupling of the gear (21) from the shaft (14) is achieved by a rotation of the spindle (25) by means of the electromechanical actuator (24) in a second direction of rotation (32) and thus a displacement of the shift fork (20) and the shift sleeve (18) in the decoupling direction (34).

5. Transmission (100) according to any of the preceding claims, **characterized in that** the shift fork (20) is coupled to the spindle (25) by way of a spindle nut (36).

6. Transmission according to any of the preceding claims, **characterized in that** the spindle (25) is guided with one of its ends in a spindle sliding bushing (42).

7. Transmission (100) according to any of the preceding claims, **characterized in that** the spindle (25) is guided with one of its ends in a spindle rolling bearing (44).

## Revendications

1. Transmission (100) pour un ensemble d'entraînement électrique avec un dispositif d'accouplement (10), la transmission (100) comportant une roue dentée (21) et un arbre (14), le dispositif d'accouplement (10) servant à accoupler et désaccoupler la roue dentée (21) à ou de l'arbre (14), le dispositif d'accouplement (10) comportant un manchon de commutation (18) pouvant être coulissé axialement le long de l'arbre (14) et une fourche de commutation (20), la roue dentée (21) pouvant être accouplée à l'arbre (14) et désaccouplée de l'arbre (14) par un coulissement du manchon de commutation (18), la fourche de commutation (20) étant accouplée au manchon de commutation (18) de telle sorte le manchon de commutation (18) peut être coulissé le long de l'arbre (14) par un entraînement de la fourche de commutation (20), un actionneur électromécanique (24) étant prévu avec une broche (25), la broche (25) pouvant tourner autour de son axe longitudinal au moyen de l'actionneur électromécanique (24), la fourche de commutation (20) étant accouplée à la broche (25), de telle sorte que la fourche de commutation (20) peut être coulissée le long de l'arbre (14) par un mouvement de rotation de la broche (25), la fourche de commutation (20) étant guidée au moyen d'une tige de guidage (26), la tige de guidage (26) comportant deux douilles de glissement (38), les douilles de glissement (38) étant disposées dans un carter (101) de transmission de la transmission (100) et une extrémité de la tige de guidage (26) étant respectivement guidée dans chaque douille de glissement (38), la tige de guidage (26) étant guidée par les douilles de glissement (38) de telle sorte que le mouvement de la tige de guidage est limité à un mouvement parallèle à l'arbre (14), la fourche de commutation (20) étant reliée fixement à la tige de guidage (26), de telle sorte que, grâce au coulissement de la fourche de commutation (20), la tige de guidage (26) se déplace également par rapport aux douilles de glissement, la tige de guidage (26) comportant deux douilles de butée (40, 41) disposées coaxialement sur la tige de guidage (26), qui sont chacune disposées entre la fourche de commutation (20) et l'une des deux douilles de glissement (38) et qui limitent un mouvement de la tige de guidage (26) dans le sens d'accouplement (30) et le sens de désaccouplement (24).

2. Transmission (100) selon la revendication 1, **caractérisée en ce que** la broche (25), la tige de guidage (26) et/ou l'arbre (14) sont disposés parallèlement les uns aux autres.

3. Transmission (100) selon la revendication 1 ou 2, **caractérisée en ce que** le dispositif d'accouplement (10) est formé de telle manière que l'accouplement de la roue dentée (21) à l'arbre (14) est obtenu par une rotation de la broche (25) au moyen de l'actionneur électromécanique (24) dans un premier sens de rotation (28) et ainsi par un coulissement de la fourche de commutation (20) et du manchon de commutation (18) dans le sens d'accouplement (30).

4. Transmission (100) selon l'une des revendications précédentes, **caractérisée en ce que** le dispositif d'accouplement (10) est formé de telle manière que le désaccouplement de la roue dentée (21) de l'arbre (14) est obtenu par une rotation de la broche (25) au moyen de l'actionneur électromécanique (24) dans un deuxième sens de rotation (32) et ainsi par un coulissement de la fourche de commutation (20) et du manchon de commutation (18) dans le sens de désaccouplement (34).

5. Transmission (100) selon l'une des revendications précédentes, **caractérisée en ce que** la fourche de commutation (20) est accouplée à la broche (25) par un écrou (36) de broche.

6. Transmission selon l'une des revendications précédentes, **caractérisée en ce que** la broche (25) est guidée par l'une de ses extrémités dans une douille de glissement (42) de broche.

7. Transmission (100) selon l'une des revendications précédentes, **caractérisée en ce que** la broche (25) est guidée par l'une de ses extrémités dans un palier à roulement (44) de broche.
